# EUROPEAN PATENT SPECIFICATION

(11) **EP 0 864 633 B1**
(45) Date of publication and mention of the grant of the patent: **14.06.2006**
(21) Application number: 98850038.5
(22) Date of filing: 16.03.1998
(51) Int. Cl.: C10G 11/18, B01J 8/08, C10G 11/16

(54) **Apparatus for mixing feed stock and catalyst particles**
Einrichtung zur Mischung von Einsatz und Katalysator
Appareillage pour mélanger la charge avec des particules de catalyseur

(30) Priority: 14.03.1997 JP 8237297; 14.03.1997 JP 8237397
(43) Date of publication of application: 16.09.1998
(60) Divisional application: 03015250.8
(73) Proprietor: Nippon Mitsubishi Oil Corporation, Tokyo (JP); PETROLEUM ENERGY CENTER, Tokyo (JP)
(72) Inventor: Nishida, Syozo, Nippon Oil Co., Ltd., Yokohama-shi, Kanagawa-ken (JP); Fujiyama, Yulchiro, Nippon Oil Co., Ltd., Yokohama-shi, Kanagawa-ken (JP)
(74) Representative: Säfwenberg, Björn

(56) References cited:
- BE-A- 715 089
- DE-B- 1 036 217
- US-A- 3 071 540
- US-A- 4 323 314
- US-A- 5 296 131

## Description

This invention relates to a method according to the preamble of claim 1.

There are known a reaction system in which solid particles as a catalyst or a heat medium is brought into contact with a reactant. A moving bed type reactor is a typical example of such reaction system which reactor is classified into one utilizing a concentrated fluidized bed (bubbles-fluidized bed) and the other utilizing a high-speed moving bed (fluidized bed). The high-velocity moving bed is used for a reaction in which a solid and a gas must come into contact for a short period of time. Currently, there has been mainly employed an upflow-type high velocity moving bed reactor so-called "riser-type" in a fluid catalytic cracking apparatus used for the production of a gasoline from a feedstock such as a heavy oil. This reactor is capable of reducing contact time with an improvement of a catalyst in ability, leading to an enhancement of selectivity of a final product and suppression in unfavorable excessive cracking reaction.

US-A-4,323,314 discloses an apparatus for adding a liquid component to a pourable powdered or granular material, suitable for mixing a fluid with catalyst particles, in which the pourable material is supplied over a deflector, after which it trickles downwards in the form of a hollow cylindrical stream, falling freely, and is sprayed with the liquid components by means of at least one nozzle as it falls. However, said document discloses a mixing apparatus for mixing specifically molasses as a liquid component and animal feedstuffs as a pourable material, and thus differs from of the present invention, which employs a downflow high velocity moving bed reactor.

DE-A-1,036,217 discloses an apparatus for cracking hydrocarbons with a short contacting time comprising a cylindrical vessel, a fluidized bed disposed above the vessel for feeding a continuous stream of fluidized particles to the reaction vessel, two cylindrical slots in the bottom of the fluidized bed for forming two concentric and hollow cylindrical streams falling downs through the reaction vessel, one central nozzle to spray the inner side of the internal cylindrical particle stream with liquid and four nozzles disposed in the vessel wall to spray the outer surface of the external cylindrical particle stream with liquid. However, the nozzles are arranged to spray a particle stream with a liquid from horizontal or transverse direction with respect to said particle stream.

Recently, a strong demand has been made for an enhancement in selective productivity of a gasoline or a light olefin and an investigation has been conducted for use of a downflow type high velocity moving bed reactor which is free from backmixing affecting adversely an improvement of the selectivity.

Upon production of a gasoline from a feedstock such as a heavy oil using a fluid catalytic cracking apparatus equipped with the existing upflow-type reactor having a high speed moving bed, the contact reaction therein takes several seconds. Whereas upon production of a light olefin the reaction time is required to be reduced in the order of ranging from 0.1 to 1.5 seconds. A rapid mixture of a feedstock and a catalyst and vaporization thereof at the inlet port of a reactor is indispensable in order to conduct the contact reaction in a short period of time. Furthermore, it has become necessary to increase a recycle ratio of a catalyst to an oil to compensate for a reduction in conversion involved with a shortened reaction time. From view of this background, there has been demanded an apparatus which is capable of rapid mixture and vaporization of the feed stock and the catalyst at the inlet of the existing upflow type reactor forming a high speed moving bed and enables a recycle ratio of a catalyst to an oil as several times as greater than that (catalyst / oil ratio of 5 - 8) of a catalytic cracking apparatus for producing a gasoline from a feedstock such as a heavy oil.

With the foregoing difficulties of the prior art in view, the present invention seeks to provide an apparatus which is capable of mixing a fluid and a solid particle uniformly and rapidly.

According to the invention, there is provided a method of mixing a fluid of a feedstock such as a heavy oil and the particles of a catalyst gasifying the fluid using a mixing apparatus which comprises a reactor having a circular port through which said particles are fed, in its upper portion,
a moving bed forming section disposed on and in communication with said reactor for forming the particles into a cylindrical high-velocity moving bed by falling the particles downwardly into said reactor while dispersing circularly the particles,
an external fluid feed section located in the upper portion of said reactor so as to spray the feed stock over the entire upper outer periphery of the cylindrical moving bed passing through said reactor and comprising a plurality of external spraying nozzles disposed facing the outer periphery of said circular port and spaced circumferentially at certain intervals, and
an internal fluid feed section located in the upper portion of said reactor and passing through said interior of said moving bed forming section so as to spray the fluid over the entire upper inner periphery of the cylindrical moving bed and comprising a plurality of internal spraying nozzles disposed facing the inner periphery of said circular port and spaced circumferentially at certain intervals,
wherein the particles of the catalyst is mixed with the fluid of the feedstock by spraying said fluid to said moving bed by means of said external spraying nozzles and internal spraying nozzles that are each oriented downwardly at an angle of 15 - 75° with respect to the horizontal direction, the spraying rate of the former nozzles to the latter nozzles being 1:1 to 3:1.

It is necessary for a short contact reaction to conduct a rapid uniform mixture of and vaporization of a feedstock and particles (catalyst) at the inlet of a reactor. Therefore, it is required to supply a feedstock in the form of fine droplet, for example by means of spray and to disperse uniformly a catalyst in the form of solid particles. The uniform mixture can be effected in a wide space but fails to be fully accomplished in a limited space. An extensive research and development to seek an alternative for solving the problem results in the following conclusion.

In this alternative solution, after a feedstock in droplet form is fined to some extent by means of a spray nozzle, the sprayed feedstock is brought into collision with solid particles so as to be further fined by impact caused by the collision. Importantly, solid particles are increased in surface area as large as possible so that the surface thereof can entirely collide with the sprayed feedstock. Hereinafter, it is described as to what kind of shape the particles take to have a large surface area in a limited size of space.

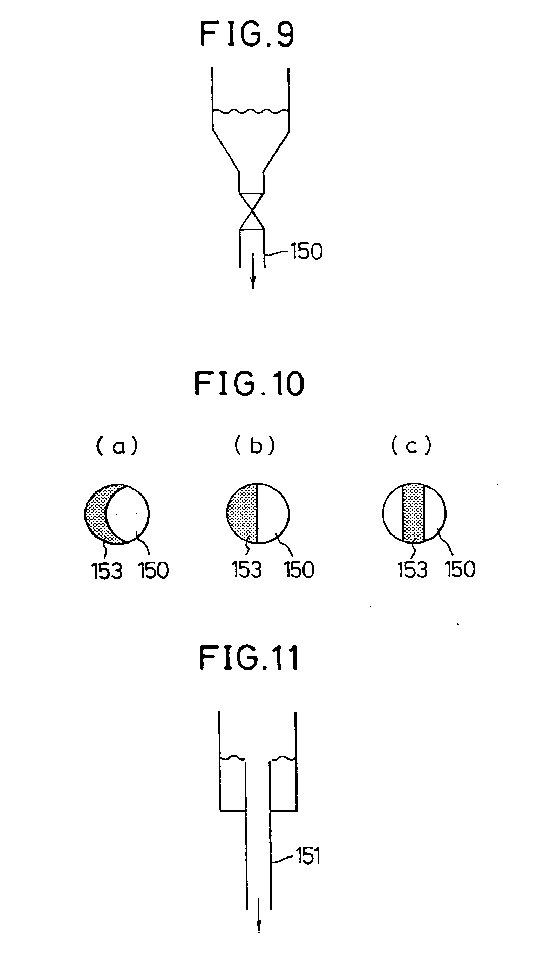

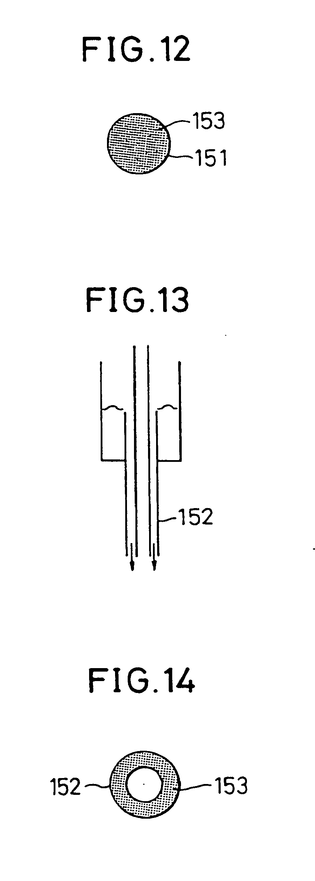

Referring to Figs. 9, 11 and 13, there are shown tubular reactors in a state that particles 153 flow downwardly with the volume thereof being controlled. Figs 10, 12 and 12 each shows a cross-sectional view of each tubular reactor 150, 151 and 152 shown in Figs 9, 11 and 13. As shown in these figures, the flowing particles in the cross section of each of the tubular reactors take simple forms among which those shown in Fig 10 (c), 12 and 14 are suitable for uniform mixture. The shape of the flowing particles in cross section of the tubular reactors shown in Figs. 10 (a) and (b) are not adequate because the particles flows locally in one side of the reactor 150. Suitable shape of the flowing particles for rapid mixture is that having a large outer surface. The cylindrical shape formed by the flowing particles as shown in Fig. 14 has the largest outer surface and thus is found to be suitable for rapid mixture. From view of the foregoing, the particles flowing in a cylindrical form are most suitable for rapid uniform mixture in a tubular reactor while controlling an amount of the particles to be mixed.

The above and other features and advantages of the invention will be better understood from reading the following detailed description with reference to the accompanying drawings.
FIG. 1 is a schematic view of an apparatus embodying the invention;
FIG. 2 is a schematic view of a modified form of apparatus embodying the invention;
FIG. 3 is a schematic view of a further modified form of apparatus embodying the invention;
FIG. 4 is a schematic view of an upper portion of a tubular reactor of the inventive apparatus;
FIG. 5 is a schematic view of a modified form of the same;
FIG. 6 is a sectional view of a tubular reactor illustrating a state that a fluid is sprayed toward particles;
FIG. 7 is a schematic view of a further modified form of apparatus embodying the invention;
FIG. 8 is a schematic view of a further modified form of apparatus embodying the invention;
FIG. 9 is an explanatory view showing particles flowing downwardly in a tube;
FIGS. 10 (a), (b) and (c) are cross-sectional views of the tube of FIG. 9 showing the particles flowing locally in the tube;
FIG. 11 is an explanatory view showing particles flowing downwardly in a tube;
FIG. 12 is a cross-sectional view of the tube of FIG. 11 showing the particles flowing locally in the tube;
FIG. 13 is an explanatory view showing particles flowing downwardly in a tube;
FIG. 14 is a cross-sectional view of the tube of FIG. 13 showing the particles flowing downwardly in the tube;

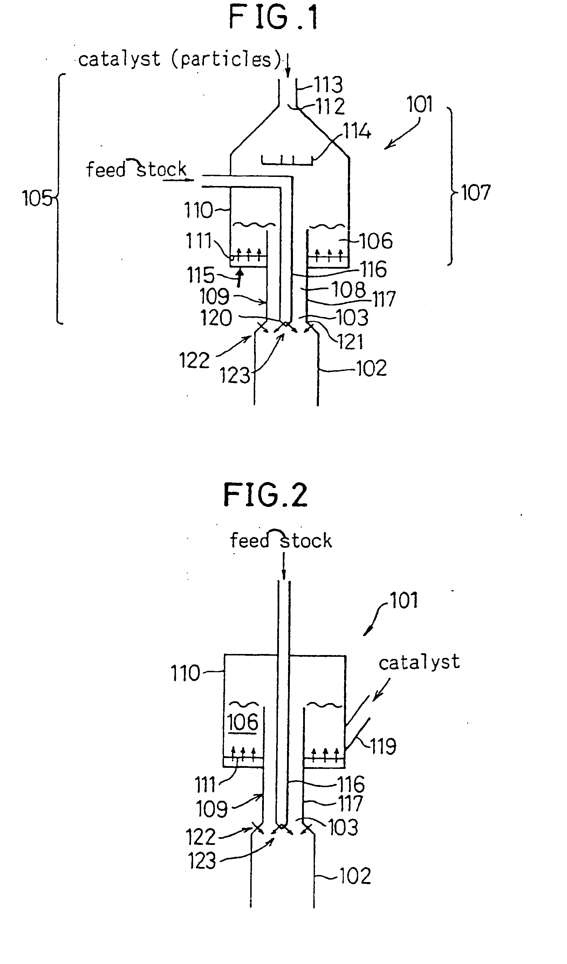

Referring now to the drawings, particularly to FIGS. 1, there is shown an apparatus 101 for mixing the fluid of a feedstock such as a heavy oil and catalyst particles enabling the heavy oil to be vaporized in a tubular reactor 102.

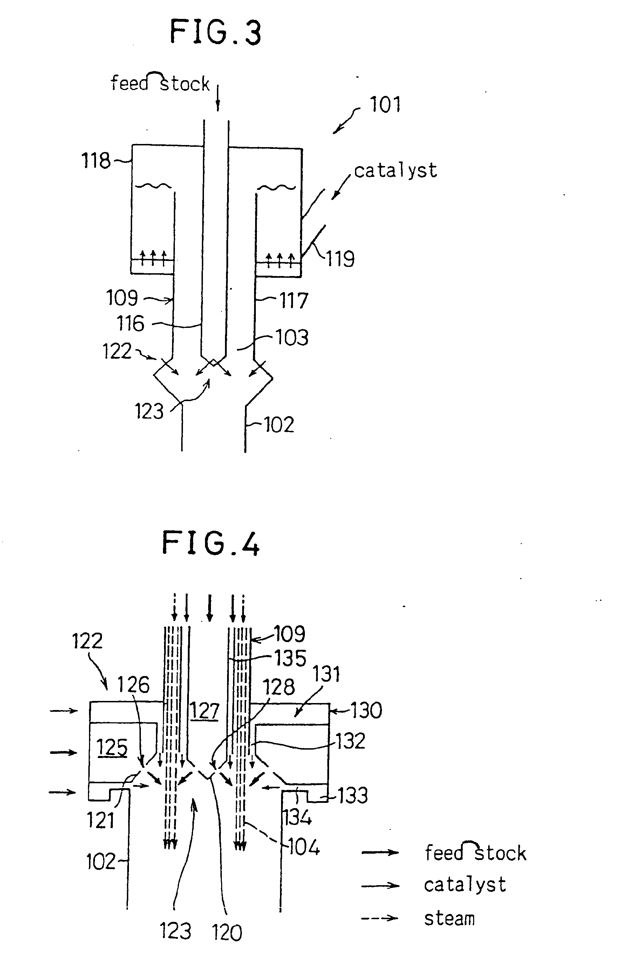

The reactor 102 is a vertically extending cylindrical tube (vertical downflow-type reactor) provided in the upper portion with a port 103 through which the catalyst particles are supplied. The mixing apparatus 101 is provided on the reactor 102 with a moving bed forming section 105 for forming a cylindrical high-velocity moving bed 104 as shown in FIG. 4 by dropping the catalyst particles from the port 103 successively while distributing the same circularly.

The forming section 105 is not restricted to the construction as long as the high-velocity moving bed 104 can be formed in the reactor 102. For instance, in FIG. 1 the particles are formed into a moving bed by fluidization using air or gas. The moving bed forming section 105 comprises a controlling section 107 for adjusting the density of a moving bed 106 formed by fluidizing the catalyst particles and a cylindrical forming tube 109 having a through passage 108 where the particles are formed into a cylindrical shape, extending vertically.

The controlling section includes a chamber 110 extending vertically and having a cross section in a circular, polygonal, rectangle or cylindrical shape. The chamber 110 is provided in the inner lower portion with a porous plate type dispersing means using a gas and a hybrid-type dispersing means. Provided in the chamber 110 in FIG. 1 is a porous plate 111. Furthermore, in the middle upper portion the chamber 110 is provided with a feed port 112 communicated with a feed pipe 113 through which to feed the particles heated at elevated temperatures such as a catalyst of silica almina particles having a particle size of 1 - 500 µm and heated at a temperature of 450 - 700°C. Mounted below the feed port 112 and above the middle portion of the chamber is a receptacle 114 receiving the particles supplied from the feed pipe 113. The particles overflow the receptacle 114 and then fall onto the porous plate 111. The bottom portion of the chamber 110 is connected with a fluid gas feed pipe 115 supplying moving gas such as air or inactive gas through the porous plate to the chamber 110 so as to fluidize the particles on the plate 111 to form the fluidized bed 106.

The chamber 110 is connected concentrically at the center of the bottom with the cylindrical forming tube 109 extending through the porous plate 111. The cylindrical tube109 has a dual wall structure comprised of an inner tube 116 and an outer tube 117 arranged in concentrical relation, forming therebetween a tubular passage 108. The inner tube 116 extends vertically in the neighborhood of the receptacle 114 and further extends therefrom horizontally so as to penetrate the side wall of the chamber 110 and connect with a heavy oil supplying device (not shown) such as a pump. The outer tube 117 extends through the porous plate 111 to a certain level which is higher than where the porous plate 111 is located and acts as a weir so that the fluidized bed is increased in height and then surged into the through passage 108, resulted in the formation of a high-velocity moving bed while passing through the outer tube 117. Needless to mention, the length of the outer tube 117 is determined by that of a high-velocity moving bed determined arbitrary.

Alternatively, the chamber 110 may be constructed as shown in FIG. 2. More specifically, a feed pipe 119 for feeding the particles may be connected with a side wall of the chamber 110 so as to feed the particles directly onto the porous plate 111 and the inner tube 116 may extend linearly so as to penetrate the top wall of the chamber 110. Even with such a construction, the fluidized bed 106 can be formed.

As shown in FIG. 1, the lower ends of the inner and outer tubes 116 and 117 are merged with an inner and outer peripheral walls 120 and 121 respectively, dividing the feed port 103 into sections through which the particles in the form of the high-velocity moving bed 104 enter into the reactor 102. The diameter of the outer tube 117 is determined depending upon the feed rate of the particles and may be formed to be smaller than the diameter of the reactor 102 as shown in FIGS. 1 and 2. Alternatively, the outer tube may have a larger diameter than that of the reactor tube in the case where the particles are fed in a large amount as shown in FIG. 3. The diameter of the inner tube 116 is also selective depending upon the feed rate of the particles.

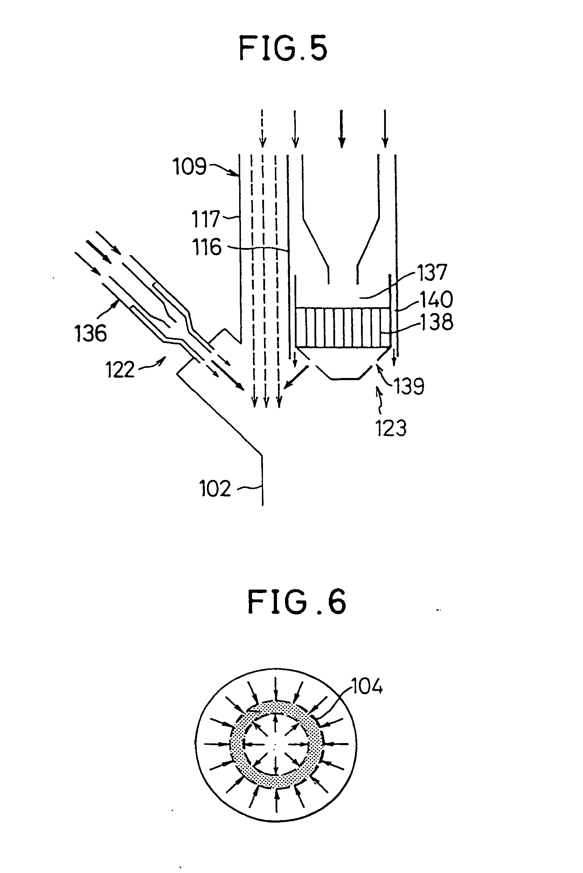

As shown in FIGS. 1 through 3, an external fluid feed section 122 is provided externally around the outer periphery of the outer walls 121 and above the reactor tube 102. The fluid feed device sprays a fluid over the whole outer periphery of the cylindrical moving bed 104. Another fluid feed section 123 is provided on the inner peripheral wall 120 to spray a fluid over the whole inner periphery of the cylindrical moving bed 104. These fluid feed sections 122 and 123 may have any type of construction as long as they can spray a liquid feedstock such as a heavy oil over the inner and outer peripheral surfaces of the moving bed 104 and thus may be constructed as shown in FIGS. 4 and 5.

FIG. 4 illustrates that a feedstock is sprayed by a hydraulic spraying system using blasting nozzles, effected by increasing linear speed thereof. In this system, there is not used an atomizing steam used as a spraying medium. More specifically, a circular feed chamber 125 for feeding a feedstock is provided integrally with the reactor 102 in surrounding relation to the outer peripheral wall 121 thereof. The circular feed chamber 125 may be provided separately from the reactor 102. The circular feed chamber 125 is provided on its inner wall (outer peripheral wall 121 of the reactor 102) with a plurality of external spraying nozzles 126 through which a feedstock is sprayed toward the cylindrical moving bed 104. These nozzles are disposed, spaced apart at certain intervals. The external spraying nozzles126 are not restricted to their spraying angle as long as a fluid can be further fined by impact upon collision with the particles. Preferably, the nozzles are arranged to spray a liquid at an angle of 15 - 75° downwardly with respect to a horizontal direction. In FIG. 4, the spray angle is 45° downwardly with respect to a horizontal direction. The number of the spraying nozzles 126 is selective if a liquid can be sprayed over the entire outer surface of a moving bed.

The inner peripheral wall 120 is substantially the lower part of the inner tube 116 which serves also as a cylindrical feed chamber 127 for feeding a feedstock. The lower end (tip) of the inner peripheral wall is in a conical shape, directed downwardly and provided with a plurality of internal spraying nozzles 128 through which the feedstock is sprayed toward to the cylindrical moving bed 104. The spraying nozzles 128 are equally spaced in the circumferential direction of the tip of the inner peripheral wall to spray the feedstock over the entire inner surface of the moving bed 104. There is no limitation to the spray angle of the internal spraying nozzles 128 if the sprayed material can be further fined by impact occurring upon collision with the particles. Preferably the internal nozzles are disposed to spray the feedstock at an angle of 15 - 75° downwardly with respect to a horizontal direction. In FIG. 4, the spraying angle of the internal nozzles is set at 45°. The number of the internal nozzles is selective as long as a feedstock can be sprayed over the entire inner surface of the moving bed 104. The ratio of the external fluid-feed section 122 to the internal fluid-feed section 123 in spraying rate is not restricted if a feedstock can be sprayed over the entire inner and outer surfaces of the moving bed 104. Preferred ratio is the range of 1 : 1 to 3 : 1.

The external and internal fluid-feed sections 122 and 123 are surrounded by a thermal insulating member 130 which prevents a feedstock from coking caused by heat conduction from the catalyst particles heated at a temperature of 450 - 700°C. The insulating member 130 is not restricted to its construction if it can prevent a feedstock from being adversely affected by the particles heated at elevated temperatures. For instance, heat insulation may be effected with the use of a conventional insulating material such as air or steam. FIG. 4 illustrates that heat insulation is effected by flowing steam into rooms formed on the upper and lower portions of the cylindrical feed chamber 125. More specifically, an upper circular steam-feed chamber 131 is disposed circumferentially on the upper portion of the feed chamber 125 to communicate with a vertically extending small space (clearance) 132 defined between the feed chamber 125 and the forming tube 109 in surrounding relation thereto. Steam supplied into the steam-feed chamber 131 flows downwardly into the reactor 102 through the small space 132 of which lower end is opened to the port 103, such that the upper portion of the feed chamber 125 is thermally insulated. Furthermore, a lower circular steam-feed chamber 133 is disposed circumferentially on the lower portion of the feed chamber 125 to communicate with a horizontally extending small space 134 defined between the steam-feed chamber 133 and the reactor 102. Steam supplied into the steam-feed chamber 133 flows horizontally into the reactor 102 through the small space 134 of which end is opened into the reactor 102, such that the lower portion of the feed chamber is thermally insulated. A vertically extending passage 135 is defined between the inner wall of the inner tube 116 and the outer wall of the feed chamber 127. In other words, the inner tube 116 has a dual structure. Steam is fed downwardly into the reactor 102 through the passage 135 of which lower end is opened into the reactor 102 to thermally insulate the feedstock sprayed through the feed chamber 127.

FIG. 5 shows exemplarily an external spraying nozzle and an internal spraying nozzle used for a method in which a fluid such as a feedstock is sprayed using a medium such as a gas or an atomizing steam. For the sake of brevity, the same parts in FIG. 5 corresponding to those in FIG. 3 are indicated by the same numeral.

An external fluid-feed 122 section in FIG. 5 is different from that in FIG. 4 in that a plurality of spraying nozzlesl 36 into which the feedstock is directly supplied, are disposed circumferentially at certain intervals to spray the feedstock over the entire outer surface of the moving bed. The spraying nozzle 136 is a type of internal mixing structure in which a feedstock flows through the center the outside of which an atomizing steam flows to the tip of the nozzle to thermally insulate the feedstock.

The internal fluid-feed section 123 in FIG. 5 employs an internal mixing structure in which an atomizer 138 is mounted in an internal mixing chamber 137 to enhance spray effect. The atomizer 138 has a plurality of nozzles 139 disposed circumferentially on its lower tip at certain intervals to spray the feedstock over the entire inner surface of the cylindrically flowing particles. A passage 140 for steam is defined by the inner wall of the inner tube 116 and the outer wall of the mixing chamber 137 to utilize a part of the atomizing steam as a thermal insulating means as well as the external spraying nozzle 136.

There is described hereinafter a method of contact-mixture of a feedstock (heavy oil) and a catalyst of silica alumina particles heated at a temperature of 450 - 700°C using the apparatus 101.

Catalyst particles are supplied from a feed pipe 113 and fall successively through a feed port 112 onto a receptacle 114 from which overflowed catalyst particles further fall onto a porous plate 111. The catalyst particles collecting on the porous plate 111 densely in the circumferential direction can be uniformly dispersed toward a spot of a lower density while being moving to be formed into the circular bed.

The fluidized bed increased in height flows beyond an outer tube 117 and into a through passage 108 from the all circumferential direction of the outer tube and formed into a cylindrical high-velocity moving bed 104 while passing via the through passage 108. The fluidized bed then enters through a port 103 into a reactor 102.

A feedstock is sprayed by external spray nozzles 126 and internal spray nozzles 128 over the upper outer and inner surfaces of the moving bed 104 entirely in the circumferential direction thereof as shown in FIG. 6. Due to a thermal insulating means 130 provided on the outsides of the external and internal spraying nozzles, the feedstock sprayed therethrough is insulated from the heat exerted from the heated catalyst particles (450-700°C) and thus free from coking. The sprayed feedstock is collided with the catalyst particles forming the cylindrical moving bed 104 and then sputtered in the form of further fined particles by impact upon the collision. Therefore, the mixture of the catalyst particles and the heavy oil can be conducted effectively. The resulting mixture moves downwardly in the reactor 102.

The apparatus makes possible the increase of the recycle ratio of a catalyst to oil in the reactor 102 up to 50:1 which is several times greater than that (5 - 8 : 1) of a fluid catalytic cracking apparatus having a conventional reactor using a rising type of high-velocity moving bed.

In the apparatus, the contact of a feedstock and particles can be effected efficiently by spraying the feedstock from both of the outer and inner peripheries of a cylindrical moving bed of the catalyst particles to be contacted and mixed therewith. Furthermore, the feedstock can be mixed rapidly and uniformly with the particles because the feedstock is further fined by impact upon contact with the cylindrically flowing particles. Due to the capability of spraying a feedstock from the outer and inner peripheries of the cylindrical particle bed, the proportion of the particles to be used can be increased such that the weight ratio of particles to a feedstock is up to 50 : 1.

Therefore, the contact reaction can be conducted uniformly for an extremely short period of time due to the capability of reduction in time (approximately 0.1 to 1.5 second) for contacting a feedstock with catalyst particles such that unfavorable excess cracking reaction can be avoided, leading to the capability of the production of a gasoline enhanced in quality.

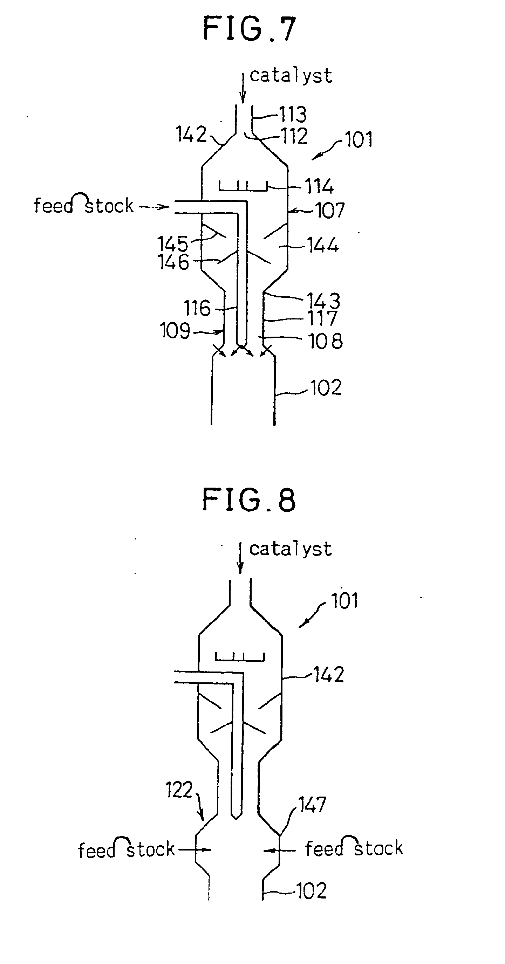

Shown in FIG. 7 is a modification of the controlling section 107 in which dispersion is conducted merely by falling freely the catalyst particles, not by fluidization.

More specifically, the controlling section 107 includes a vessel 142 which is in the form of a vertical cylinder having an feed port 112 connected with a feed pipe for feeding particles on its upper portion and a receptacle 114 for receiving the particles in the internally upper portion and below the feed port 112. The vessel 142 has a lower part in the form of a hopper reduced in diameter progressively toward the bottom. Provided on the bottom is a discharge port 143 connected with the tip end of an outer tube 117 constituting a moving bed forming tube 109. An inner tube also constituting the forming tube 109 extends in close proximity of the receptacle 114 and then extends curvedly in a horizontal direction to penetrate the side wall of the vessel 142. Between the inner tube 116 and the vessel 142, there is defined a vertical cylindrical passage 144 through which particles pass downwardly. In the passage 144, a plurality of baffles 145 and 146 are disposed at certain intervals in the longitudinal direction to alter the flow direction of particles so as to disperse them uniformly in the circumferential direction. The baffles 145 and 146 are not restricted to their shapes and number if they can alter the flow direction of the particles and disperse the particles uniformly in the circumferential direction. In the embodiment in FIG. 7, two circular baffles 145 and 146 are disposed at a certain interval to be spaced apart in the vertical direction. More specifically, the circular upper baffle 145 is inclined downwardly toward the inner radial direction and fixed at the outer peripheral edge to the inner wall of the vessel 142, defining a through-opening between the inner peripheral edge and the inner tube 116. The lower circular baffle 146 is inclined downwardly toward the outer radial direction and fixed at the inner peripheral edge to the outer wall of the inner tube 116, defining a through-opening between the outer peripheral edge and the inner wall of the vessel 142. A gas may be supplied through the inlet 112 together with particles. In the case of supplying catalyst particles in a small amount, they can pass smoothly through the forming section 109 by their own weight without feeding a gas. However, if an attempt of feeding the catalyst particles in a large amount without feeding a gas is made, a pressure loss occurs in the forming section 109, leading to repletion of the vessel with the catalyst particles due to the provision of the plurality of the baffles. Therefore, the supplement of pressure is required to overwhelm the pressure loss in the forming section 109 by feeding a gas together with a catalyst. Furthermore, the reason for feeding a gas is to facilitate to uniform the density of particles.

With this construction, particles overflowing the receptacle 114 fall onto the upper baffle 145 and move inwardly in the radial direction to the peripheral edge from which the particles fall through the opening onto the lower baffle 146. The particles on the lower baffle move outwardly in the radial direction to the peripheral edge from which the particles fall via the through opening onto the lower portion of the hopper. In this way, the particles are dispersed uniformly in density in the radial direction as they move over the baffles 145 and 146.

The particles uniformed in density flow successively into the through passage 108 and formed into a high-velocity moving bed in a cylindrical shape while passing through the through passage 108 in the above-described manner.

The particles in the form of the cylindrical moving bed are brought into contact with a feedstock fed by spraying from its outer and inner peripheries so that the contact can be effected efficiently. Furthermore, the sprayed feedstock is further fined by impact upon the contact, leading to the more efficient contact so that the uniform mixture of the feedstock and particles can be conducted rapidly.

FIGS. 8 shows a modification of the apparatus shown in FIG. 7 which is different in that the upper portion 147 of a reactor 102 is widened in diameter to be the same as that of a vessel 142 and provided with an external fluid feed section 122 from which a feedstock is sprayed in a horizontal direction, not at an angle of 45° downwardly.

The invention will be further described by way of the following examples which are provided only for illustrative purposes.

### Experiment 1

There were used five types of mixing apparatuses in the form as shown FIGS. 1, 2, 7, 8 and 3 each of which was designated as Apparatus A, B, C, D and E respectively. The principal dimensions of each apparatus are shown in Table 1.

There were used catalyst particles generally used in a flowing catalytic cracking apparatus producing a gasoline from a heavy oil. The catalyst was 63 microns in an average particle size and 0.85 g/cm³ in a bulking density. Air at normal temperature was used as a fluid to be sprayed instead of a feedstock.

The experimental conditions were established on the assumption that mixing and gasification had just completed by spraying a feedstock to catalyst particles heated at a temperature of 600°C but the reaction had not occurred yet. The experimental conditions based on the assumption were changed in a feed rate of catalyst from 10 kg/min to 100 kg/min and a feed rate of air from 5 m³/h to 50 m³/h. The feed rate of air was adjusted by varying the spraying ratio of an internal spraying nozzle to an external spraying nozzle. These apparatuses are made from vinyl chloride. The state of mixture was observed by using a video camera and by viewing.

### Example 1

There were conducted the experiments using Apparatus A under the various conditions mentioned above. A fluidized bed of the catalyst fed at a feet rate of 30 kg/min flowed beyond the upper edge of the forming section and fell freely therethrough. The feed rate exceeding 30 kg/min led to a fluidized bed increased in height and as a result thereof the particles flowed beyond the edge of the forming section were forced tc flow into the forming section by the air supplied to disperse the fluidized bed. This is presumably caused by pressure loss in the forming section. However, both particles fed at increased feed rate and reduced feed rate after passing through the forming chamber were formed into a well-cylindrical shape. It is observed that the particles flowed locally toward the center of the reactor when the mixture was conducted by using only the external nozzles. On the contrary, when only the internal nozzles were used, it was observed that the particles collided with the inner wall of the reactor. The mixability was most excellent when the spray ratio of the external nozzles to the internal nozzles was 2 to 1. The mixability was improved with an increase of the feed rate of air.

### Example 2

There were conducted the same experiments as those of Example 1 using Apparatus B. As well as Apparatus A, Apparatus B was excellent in formability of the particles into a cylindrical shape and in mixability of the particles and the air. The cylinder of the particles formed by Apparatus A had a diameter of 60 mm while that formed by Apparatus B had 70 mm. However, there was not observed the difference in the mixture thus obtained resulted from the difference in diameter.

### Example 3

There were conducted the same experiments as those of Example 1 using Apparatus C. Apparatus C was provided in the controlling section for adjusting the density of the particles with baffles to distribute the particles uniformly in density and constructed so that the particles freely fall through the forming section. In this connection, the catalyst particles started accumulating in the controlling section when fed at a rate exceeding 20 kg/min. Whereas when fed at a rate increased up to 30 kg/min the catalyst particles filled the control section and passed through the moving bed forming section with their own weight increased with the accumulated particles increased in height. However, this was able to be avoided by introducing air from somewhere in the middle portion of the feed pipe. In both cases, the particles were formed into a well cylindrical shape and mixed with the air excellently.

### Example 4

The experiments were conducted using Apparatus D. In the experiment conducted to observe the mixability of the particles and the air, the external spraying nozzles were only used. The external spraying nozzles were set to spray air in a horizontal direction differently from those of the other apparatuses. The particles were not mixed with the air well because they flow locally along the center portion of the reactor.

### Example 5

There were conducted the same experiments as those of Example 1 using Apparatus E which was increased in diameter of the cylindrical moving bed-forming section so as to be deal with a situation that the catalyst particles are increased in feed rate. In this apparatus, the particles was not increased in level in the chamber even though the feed rate thereof was increased up to 100 kg/min and thus was able to pass smoothly through the forming section beyond the edge of the outer tube constituting the forming section. As well as Example 1, the particles were formed into a well cylindrical shape and mixed with the air excellently.

### Experiment 2

The apparatuses used for this experiment were two-dimensional model. Two-dimensional models B, C and E correspond to the apparatuses shown in FIGS. 2, 7 and 3. The dimensions of each of the two-dimensional models were one and half times larger than that of the respective corresponding apparatuses and 10 mm in thickness. The spraying nozzles were disposed four in total number. Two external spraying nozzles were arranged in pairs of oppositely oriented two internal spraying nozzles. All of these spraying nozzles were disposed to spray at an angle of 45° downwardly with respect to the flow direction of the particles. The principal dimensions of each of the two-dimensional models are shown in Table 2.

### Example 6

The shape of the cylindrically flowing particles and the mixability of the particles and the air in the reactor were observed using Model B with varied feed rates of the catalyst and the air. Actually the cylindrically flowing particles formed in this model were in the form of a quadratic prism but referred to as "cylindrical" for the sake of convenience. It was observed that the cylindrically flowing particles tended to be increased in density of the outer periphery when fed at a low rate. The mixability in the reactor was extremely improved when the air feed ratio of the external spraying nozzles and the internal spraying nozzles was 1 : 1.

### Example 7

There were conducted the same experiments as those of Example 6 using Model C. Which was provided with baffles to uniform the density of the particles. Due to the provision of the baffles, the particles were dispersed uniformly in density and thus formed into a well cylindrical shape as well as Example 6. The mixability in the reactor was also excellent as well as Example 6.

### Example 8

There were conducted the same experiments as those of Example 6 using Model E. This model corresponds to Apparatus E having the forming zone of which diameter was larger than that of the reactor to deal with a situation that the particles were fed at a extremely high rate. The particles thus formed cylindrically had a larger diameter than that of the reactor, whereby the cylindrical particles were increased in density at the outer periphery when the spraying ratio of the external spraying nozzles and the external spraying nozzles was 1:1. The mixability was improved with the spraying rate of the external spraying nozzles increased gradually. With further increase of the spraying rate, the mixability was deteriorated. Therefore, it was observed that there existed an optimum in the spraying ratio of the external spraying nozzles and the internal spraying nozzles. The optimum ratio was substantially 1.5 : 1. The mixability was excellent at this ratio.

**TABLE 1 Dimensions of Apparatuses**

| | Apparatus A | Apparatus B | Apparatus C | Apparatus D | Apparatus E |
|---|---|---|---|---|---|
| Diameter of Controlling Section mm | 200 | 200 | 100 | 100 | 320 |
| Length of Controlling Section mm | 300 | 300 | 250 | 250 | 300 |
| Diameter of Outer Tube mm | 60 | 70 | 70 | 70 | 100 |
| Length of Outer Tube mm | 100 | 100 | 50 | 50 | 100 |
| Diameter of Inner Tube mm | 30 | 40 | 40 | 40 | 60 |
| Diameter of Spray Nozzle for Feedstock mm | | | | | 100 |
| Diameter of Reactor mm | 80 | 80 | 80 | 80 | 80 |
| Diameter of External Nozzle mm | 2 | 2 | 2 | 2 | 2 |
| Number of External Nozzle | 32 | 32 | 32 | 32 | 32 |
| Diameter of Internal Nozzle mm | 2 | 2 | 2 | 2 | 2 |
| Number of Internal Nozzle | 16 | 16 | 16 | 16 | 16 |
| Downward Angle of Spraying Feedstock degree | 45 | 45 | 45 | Horizontal | 45 |
| | | | | 0 | |

**TABLE 2 Dimensions of Two-Dimensional Model Mixing Apparatus**

| | Two-Dimensional Model B | Two-Dimensional Model C | Two-Dimensional Model E |
|---|---|---|---|
| Diameter of Controlling Section mm | 300 | 150 | 320 |
| Length of Controlling Section mm | 300 | 250 | 300 |
| Diameter of Outer Tube mm | 100 | 100 | 150 |
| Length of Outer Tube mm | 150 | 70 | 150 |
| Diameter of Inner Tube mm | 60 | 60 | 90 |
| Diameter of Spray Nozzle for Feedstock mm | | | 150 |
| Diameter of Reactor mm | 120 | 120 | 120 |
| Thickness of Mixing Section and Reactor mm | 10 | 10 | 10 |
| Diameter of External Nozzle mm | 3.5 | 3.5 | 3.5 |
| Number of External Nozzle | | 2 2 2 | |
| Diameter of Internal Nozzle mm | 3.5 | 3.5 | 3.5 |
| Number of Internal Nozzle | 2 | 2 | 2 |
| Downward Angle of Spraying Feed Feedstock degree | 45 | 45 | 45 |

## Claims

1. A method of mixing a fluid of a feedstock such as a heavy oil and the particles of a catalyst gasifying the fluid using a mixing apparatus (101) which comprises a reactor (102) having a circular port (103) through which said particles are fed, in its upper portion, a moving bed forming section (105) disposed on and in communication with said reactor (102) for forming the particles into a cylindrical high-velocity moving bed (104) by falling the particles downwardly into said reactor while dispersing circularly the particles, an external fluid feed section (122) located in the upper portion of said reactor so as to spray the feedstock over the entire upper outer periphery of the cylindrical moving bed (104) passing through said reactor and comprising a plurality of external spraying nozzles (126) disposed facing the outer periphery of said circular port (103) and spaced circumferentially at certain intervals, and
an internal fluid feed section (123) located in the upper portion of said reactor and passing through said interior of said moving bed forming section (105) so as to spray the fluid over the entire upper inner periphery of the cylindrical moving bed (104) and comprising a plurality of internal spraying nozzles (128) disposed facing the inner periphery of said circular port (103) and spaced circumferentially at certain intervals,
wherein the particles of the catalyst is mixed with the fluid of the feedstock by spraying said fluid to said moving bed by means of said external spraying nozzles (126) and internal spraying nozzles (128) that are each oriented downwardly at an angle of 15 - 75° with respect to the horizontal direction, the spraying rate of the former nozzles to the latter nozzles being 1:1 to 3:1.

2. The method according to claim 1 wherein said external spraying nozzles (126) and internal spraying nozzles (128) are each oriented downwardly at an angle of 45° with respect to the horizontal direction.

3. The method according to claim 1 wherein said spraying rate of the external spraying nozzles (126) to the internal spraying nozzles (128) is 1,5:1 or 2:1 with a downward angle of the nozzles of 45°.

4. The method according to any one of claims 1 to 3 wherein said moving bed forming section (105) comprises a controlling section (107) in which a fluidized bed is formed by fluidizing the particles and adjusted in density by dispersing the particles uniformity in a horizontal direction, and a cylindrical forming tube (109) defining therein a through passage (108) and having the upper end extending to the upper portion of the fluidized bed and the lower end connected with said circular port (103) of said reactor.

5. The method according to any one of claims 1 to 3 wherein said moving bed forming section (105) comprises a controlling section (107) provided with a plurality of baffles 145, 146) disposed to be spaced equally apart in a vertical direction to disperse uniformly the particles in a circumferential direction by changing the flow direction of the particle and a cylindrical forming tube (109) defining therein a through passage (108) and having the upper end connected with the lower portion of said controlling section (107) and the lower end connected with said circular port (103) of said reactor.

6. The method according to any one of claims 4 and 5 wherein said cylindrical forming tube (109) has a dual structure comprised of an outer tube (117) through which the moving bed flows and an inner tube (116) through which he feedstock flows.

7. The method according to claim 4 wherein said controlling section (107) includes a chamber (110) provided at lower part with a porous plate (111) through which a fluidized gas is fed by a feed pipe (115).

8. The method according to any one of claims 1 to 5 wherein a thermal insulating means (130) is provided in surrounding relation to said fluid section to prevent the fluid sprayed thereinto from being affected by the heat of the particles heated at a temperature of over 300°C.

## Patentansprüche

1. Verfahren zum Mischen eines Fluids eines Einsatzmaterials wie beispielsweise eines Schweröls und der Partikel eines das Fluid in Gas umwandelnden Katalysators unter Verwendung eines Mischapparates (101), der einen Reaktor (102) umfaßt, mit einer kreisförmigen Öffnung (103), durch welche die Partikel zugeführt werden, und in seinem oberen Abschnitt einen Ausbildungsabschnitt (105) für ein Bewegtbett hat, der an und in Verbindung mit dem Reaktor (102) ausgebildet ist, um die Partikel in einem zylindrischen Hochgeschwindigkeitsbewegtbett (104) auszubilden durch Nach-Unten-Fallenlassen der Partikel in den Reaktor, während die Partikel kreisförmig verteilt werden, einen externen Fluidzuführabschnitt (122) umfaßt, der in dem oberen Abschnitt des Reaktors angeordnet ist, um das Einsatzmaterial über den gesamten oberen Außenumfang des zylindrischen Bewegtbetts (104), das durch den Reaktor gelangt, zu sprühen und mehrere externe Sprühdüsen (126) umfaßt, die zum Außenumfang der kreisförmigen Öffnung (103) weisend angeordnet und umfangsmäßig in gewissen Intervallen beabstandet sind und
einen internen Fluidzuführabschnitt (123) umfaßt, der in dem oberen Abschnitt des Reaktors angeordnet ist, und durch das Innere des Ausbildungsabschnitts (105) für ein Bewegtbett führt, um das Fluid über den gesamten oberen Innenumfang des zylindrischen Bewegtbetts (104) zu sprühen und mehrere interne Sprühdüsen (128) umfaßt, die zu dem Innenumfang der kreisförmigen Öffnung (103) hin weisend und umfangsmäßig in bestimmten Intervallen beabstandet angeordnet sind, wobei die Partikel des Katalysators mit dem Fluid des Einsatzmaterials gemischt werden durch Sprühen des Fluids zu dem Bewegtbett mit Hilfe externer Sprühdüsen (126) und interner Sprühdüsen (128), die jeweils nach unten gerichtet sind unter einem Winkel von 15-75° in Bezug auf die horizontale Richtung, wobei die Sprührate von den erstgenannten Düsen zu den zuletzt genannten Düsen 1:1 bis 3:1 ist.

2. Verfahren nach Anspruch 1, bei welchem die externen Sprühdüsen (126) und die internen Sprühdüsen (128) jeweils nach unten gerichtet sind unter einem Winkel von 45° in Bezug auf die horizontale Richtung.

3. Verfahren nach Anspruch 1, bei welchem die Sprührate der externen Sprühdüsen (126) zu den internen Sprühdüsen (128) 1,5:1 oder 2:1 ist, mit einem nach unten gerichteten Winkel der Düsen von 45°.

4. Verfahren nach einem der Ansprüche 1 bis 3, bei welchem der Ausbildungsabschnitt (105) für ein Bewegtbett einen Steuerabschnitt (107) umfaßt, indem ein Wirbelbett ausgebildet wird durch Fluidisieren der Partikel und dichtemäßig eingestellt wird durch gleichförmiges Verteilen der Partikel in horizontaler Richtung, sowie ein zylindrisches Formgebungsrohr (109), das darin einen Durchgang (108) definiert und dessen oberes Ende zu dem oberen Abschnitt des Wirbelbetts verläuft und dessen unteres Ende mit der kreisförmigen Öffnung (103) des Reaktors verbunden ist.

5. Verfahren nach einem der Ansprüche 1 bis 3, bei welchem der Ausbildungsabschnitt (105) für ein Bewegtbett einen Steuerabschnitt (107) umfaßt, der mit mehreren Prallplatten (145, 146) versehen ist, die in einer vertikalen Richtung gleich beabstandet voneinander getrennt angeordnet sind, um gleichförmig die Partikel in einer Umfangsrichtung zu verteilen durch Änderung der Strömungsrichtung des Partikels, sowie ein zylindrisches Formgebungsrohr (109), das darin einen Durchgang (108) definiert und dessen oberes Ende mit dem unteren Abschnitt des Steuerabschnitts (107) verbunden ist und dessen unteres Ende mit der kreisförmigen Öffnung (103) des Reaktors verbunden ist.

6. Verfahren nach einem der Ansprüche 4 und 5, bei welchem das zylindrische Formgebungsrohr (109) eine duale Struktur hat, bestehend aus einem äußeren Rohr (117), durch welches das Bewegtbett strömt und einem inneren Rohr (116), durch welches das Einsatzmaterial strömt.

7. Verfahren nach Anspruch 4, bei welchem der Steuerabschnitt (107) eine Kammer (110) aufweist, die an einem unteren Teil mit einer durchlässigen Platte (111) versehen ist, durch die ein verflüssigtes Gas über ein Zuführrohr (115) zugeführt wird.

8. Verfahren nach einem der Ansprüche 1 bis 5, bei welchem eine thermisch isolierende Einrichtung (130) in den Fluidabschnitt umgebender Beziehung vorgesehen ist, um zu verhindern, daß darin hineingespraytes Fluid beeinflußt wird durch die Wärme der Partikel, die auf eine Temperatur von über 300°C aufgeheizt wurden.

## Revendications

1. Procédé destiné à mélanger un fluide d'une charge telle qu'une huile lourde et les particules d'un catalyseur gazéifiant le fluide au moyen d'un appareil de mélange (101) qui comprend un réacteur (102) ayant un orifice circulaire (103) à travers lequel lesdites particules sont amenées, dans sa partie supérieure, une section de formation de lit mobile (105) disposée sur, et en communication avec, ledit réacteur (102) afin de transformer les particules en un lit mobile à grande vitesse cylindrique (104) par la chute des particules dans ledit réacteur tout en dispersant de façon circulaire les particules, et une section d'alimentation en fluide externe (122) située dans la partie supérieure dudit réacteur afin de pulvériser la charge sur l'ensemble de la périphérie externe supérieure du lit mobile cylindrique (104) en passant à travers ledit réacteur et comprenant une pluralité de buses de pulvérisation externes (126) disposées en face de la périphérie externe dudit orifice circulaire (103) et espacées circonférentiellement selon certains intervalles, et
une section d'alimentation en fluide interne (123) située dans la partie supérieure dudit réacteur et passant à travers ledit intérieur de ladite section de formation de lit mobile (105) afin de pulvériser le fluide sur l'ensemble de la périphérie interne supérieure du lit mobile cylindrique (104) et comprenant une pluralité de buses de pulvérisation internes (128) disposées en face de la périphérie interne dudit orifice circulaire (103) et espacées circonférentiellement selon certains intervalles,
dans lequel les particules du catalyseur sont mélangées avec le fluide de la charge par pulvérisation dudit fluide sur ledit lit mobile au moyen desdites buses de pulvérisation externes (126) et desdites buses de pulvérisation internes (128) qui sont orientées chacune vers le bas selon un angle de 15 à 75 ° par rapport à la direction horizontale, le rapport de pulvérisation des premières buses par rapport aux dernières buses étant de 1 : 1 à 3 : 1.

2. Procédé selon la revendication 1, dans lequel lesdites buses de pulvérisation externes (126) et buses de pulvérisation internes (128) sont orientées chacune vers le bas selon un angle de 45 ° par rapport à la direction horizontale.

3. Procédé selon la revendication 1, dans lequel ledit rapport de pulvérisation des buses de pulvérisation externes (126) et des buses de pulvérisation internes (128) est de 1,5: 1 ou 2: 1 avec un angle des buses de 45 ° orienté vers le bas.

4. Procédé selon l'une quelconque des revendications 1 à 3, dans lequel ladite section de formation de lit mobile (105) comprend une section de contrôle (107) dans laquelle un lit fluidisé est formé par fluidisation des particules et est ajusté en densité par dispersion des particules de façon uniforme dans une direction horizontale, et un tube de formation cylindrique (109) y définissant un passage débouchant (108) et ayant l'extrémité supérieure qui s'étend vers la partie supérieure du lit fluidisé et l'extrémité inférieure raccordée audit orifice circulaire (103) dudit réacteur.

5. Procédé selon l'une quelconque des revendications 1 à 3, dans lequel ladite section de formation de lit mobile (105) comprend une section de contrôle (107) prévue avec une pluralité de chicanes (145, 146) disposées pour être écartées de façon égale dans une direction verticale afin de disperser uniformément les particules dans une direction circonférentielle par modification de la direction de circulation des particules et un tube de formation cylindrique (109) y définissant un passage débouchant (108) ayant l'extrémité supérieure raccordée à la partie inférieure de ladite section de contrôle (107) et l'extrémité inférieure raccordée audit orifice circulaire (103) dudit réacteur.

6. Procédé selon l'une quelconque des revendications 4 à 5, dans lequel ledit tube de formation cylindrique (109) a une double structure constituée d'un tube externe (117) à travers lequel circule le lit mobile et un tube interne (116) à travers lequel circule la charge.

7. Procédé selon la revendication 4, dans lequel ladite section de contrôle (107) comporte une chambre (110) prévue au niveau de la partie inférieure avec une plaque poreuse (111) à travers laquelle un gaz fluidisé est amené par un tuyau d'alimentation (115).

8. Procédé selon l'une quelconque des revendications 1 à 5 dans lequel un moyen d'isolation thermique (130) est prévu autour de ladite section de fluide pour empêcher le fluide pulvérisé dans celle-ci d'être affecté par la chaleur des particules chauffées à une température supérieure à 300 °C.
